# EUROPÄISCHE PATENTSCHRIFT

(11) **EP 3 259 791 B1**
(45) Veröffentlichungstag und Bekanntmachung des Hinweises auf die Patenterteilung: **26.09.2018**
(21) Anmeldenummer: 16703986.6
(22) Anmeldetag: 11.02.2016
(51) Int. Cl.: H01M 2/10, H01M 10/42, H01M 10/48, B60L 11/18, H02J 7/00, H01M 2/34, H01M 10/0525

(54) **VERFAHREN ZUM BETREIBEN VON BATTERIEZELLEN EINER BATTERIE, BATTERIE SOWIE KRAFTFAHRZEUG**
METHOD FOR OPERATING BATTERY CELLS OF A BATTERY, BATTERY AND MOTOR VEHICLE
PROCÉDÉ PERMETTANT DE FAIRE FONCTIONNER LES ÉLÉMENTS DE BATTERIE D'UNE BATTERIE, BATTERIE ET VÉHICULE AUTOMOBILE

(30) Priorität: 18.02.2015 DE 102015002148
(43) Veröffentlichungstag der Anmeldung: 27.12.2017
(73) Patentinhaber: Audi AG, 85045 Ingolstadt (DE)
(72) Erfinder: HINTERBERGER, Michael, 85055 Ingolstadt (DE); HELLENTHAL, Berthold, 90596 Schwanstetten (DE)
(74) Vertreter: Neuhausen, Marc-Alexander
(86) Internationale Anmeldenummer: PCT/EP2016/052940
(87) Internationale Veröffentlichungsnummer: WO 2016/131708

(56) Entgegenhaltungen:
- EP-A2- 2 641 783
- US-A1- 2014 045 036

## Beschreibung

Die Erfindung betrifft ein Verfahren zum Betreiben von zumindest zwei elektrisch parallel geschalteten Batteriezellen einer Batterie für ein Kraftfahrzeug, wobei jede der Batteriezellen ein galvanisches Element mit zwei Elektroden und ein Batteriezellengehäuse zum Aufnehmen des galvanischen Elementes mit zwei Anschlüssen aufweist und jede der Elektroden mit jeweils einem Anschluss der Batteriezelle elektrisch gekoppelt wird. Die Erfindung betrifft außerdem eine Batterie sowie ein Kraftfahrzeug mit einer Batterie.

Es ist bereits aus dem Stand der Technik bekannt, einzelne Batteriezellen zu Batterien beziehungsweise Batteriesystemen, beispielsweise über Stromschienen oder Stromkabel, elektrisch zu verschalten. Diese Batterien werden heutzutage insbesondere als Traktionsbatterien in Kraftfahrzeugen, beispielsweise in Elektro- oder Hybridfahrzeugen, zum Antreiben der Kraftfahrzeuge eingesetzt. Dabei können die Batteriezellen seriell oder parallel verschaltet werden. Aufgrund der Tatsache, dass sich beim Parallelverbund von Batteriezellen unterschiedliche Widerstandsweglängen entlang der Stromschienen beziehungsweise Stromkabel ergeben, die Batteriezellen außerdem unterschiedliche Innenwiderstände aufweisen und zusätzlich unterschiedliche Übergangswiderstände bei den jeweiligen Anknüpfpunkten zwischen der Stromschiene und dem jeweiligen Batteriezellanschluss vorliegen, ergeben sich unterschiedliche Strombelastungen bei den jeweiligen Batteriezellen im Parallelverbund.

Da im Parallelverbund nämlich an allen Batteriezellen die gleiche elektrische Spannung anliegt, ergibt sich durch die unterschiedlichen Widerstände ein unterschiedlicher Strom für die Batteriezellen. Dabei werden Batteriezellen, deren Gesamtwiderstandspfad kleiner ist, stärker belastet als Batteriezellen mit einem höheren Gesamtwiderstandpfad. Aus dieser ungleichen Belastung beziehungsweise aus dieser inhomogene Beanspruchung der Batteriezellen im Parallelverbund resultierten Einschränkungen der Lebensdauer und Produktivität (Performance) einzelner Batteriezellen und damit der gesamten Batterie.

Es ist Aufgabe der vorliegenden Erfindung, eine Lösung bereitzustellen, mittels welcher Batteriezellen besonders schonend und damit Lebensdauer verlängernd betrieben werden können.

Diese Aufgabe wird erfindungsgemäß durch ein Verfahren, eine Batterie sowie ein Kraftfahrzeug mit den Merkmalen gemäß den unabhängigen Patentansprüchen gelöst. Vorteilhafte Ausführungen der Erfindung sind Gegenstand der abhängigen Patentansprüche, der Beschreibung und der Figuren.

Das erfindungsgemäße Verfahren dient dem Betreiben von zumindest zwei elektrisch parallel geschalteten Batteriezellen einer Batterie für ein Kraftfahrzeug. Dabei weist jede der Batteriezellen ein galvanisches Element mit zwei Elektroden und ein Batteriezellengehäuse zum Aufnehmen des galvanischen Elementes mit zwei Anschlüssen auf. Außerdem wird jede der Elektroden mit jeweils einem Anschluss der Batteriezelle elektrisch gekoppelt. Darüber hinaus wird von den Batteriezellen jeweils ein Wert einer Zustandsgröße gemessen. Diese Werte der Zustandsgröße der Batteriezellen werden miteinander verglichen. Bei einer Abweichung der Werte voneinander, welche außerhalb eines vorgegebenen Toleranzbereiches liegt, wird ein elektrischer Widerstand zwischen zumindest einer Elektrode und einem der Anschlüsse zumindest einer der Batteriezellen, und folglich eine Strombelastung zumindest einer der Batteriezellen, so eingestellt, dass die Abweichung innerhalb des vorgegebenen Toleranzbereiches liegt.

Das galvanische Element jeder der Batteriezellen ist insbesondere als eine Sekundärzelle ausgestaltet, welche zum Versorgen einer elektrischen Komponente entladbar und nach der Entladung wieder aufladbar ist. Das galvanische Element ist in dem Batteriezellengehäuse angeordnet, wobei eine erste der Elektroden des galvanischen Elementes elektrisch mit einem ersten der Anschlüsse elektrisch gekoppelt ist und eine zweite der Elektroden des galvanischen Elementes mit einem zweiten der Anschlüsse elektrisch gekoppelt ist. Somit kann die von dem galvanischen Element bereitgestellte elektrische Energie an den Anschlüssen abgegriffen werden oder es kann dem galvanischen Element über die Anschlüsse Energie zum Laden zugeführt werden.

Die Batteriezellen sind elektrisch parallel geschaltet. Dabei sind die jeweils ersten Anschlüsse der Batteriezellen, beispielsweise über eine Stromschiene oder ein Stromkabel, elektrisch miteinander verbundenen und die zweiten Anschlüsse der Batteriezellen elektrisch miteinander verbunden. Auch kann es vorgesehen sein, dass die zumindest zwei Batteriezellen elektrisch parallel zu einem Batteriemodul verschaltet sind und das Batteriemodul beispielsweise elektrisch seriell mit zumindest einem weiteren, gleichartigen Batteriemodul zu der Batterie verschaltet ist.

Für die Batteriezellen, insbesondere für jede der Batteriezellen, wird nun der Wert der Zustandsgröße, beispielsweise von Sensoreinrichtungen der Batteriezellen, erfasst und die Werte der Zustandsgröße der Batteriezellen miteinander verglichen. Dazu können die Werte beispielsweise an eine übergeordnete Steuereinrichtung übertragen werden. Zum Übertragen kann jede der Batteriezellen eine Kommunikationseinrichtung, beispielsweise in Form einer Funkantenne, aufweisen, über welche die Werte drahtlos übertragbar sind.

Es wird angestrebt, dass die Werte der Zustandsgröße für alle Batteriezellen der Batterie etwa gleich sind, also die Abweichung zwischen den Werten etwa Null ist. Wenn die Werte aber über den vorbestimmten Toleranzbereich hinaus voneinander abweichen, so kann dies auf eine unsymmetrische Belastung der einzelnen Batteriezellen in dem Parallelverbund oder auf einen Defekt einer Batteriezelle hinweisen.

Daraufhin wird der Widerstand zwischen zumindest einer der Elektroden und dem mit dieser Elektrode gekoppelten Anschluss zumindest einer der Batteriezellen dynamisch angepasst. Anders ausgedrückt bedeutet dies, dass ein Innenwiderstand der zumindest einen Batteriezelle dynamisch verändert wird. Durch die dynamische Anpassung des Innenwiderstandes wird eine Strombelastung der zumindest einen Batteriezelle eingestellt, um somit die Abweichung der Werte der Zustandsgröße der einzelnen Batteriezellen voneinander zu kompensieren.

Wenn beispielsweise der Wert der Zustandsgröße nur einer der Batteriezellen von den Werten der Zustandsgröße der anderen Batteriezellen abweicht, so kann der elektrische Widerstand der einen, abweichenden Batteriezelle dynamisch angepasst werden. Durch die Anpassung kann der Wert der Zustandsgröße der abweichenden Batteriezelle eingestellt werden, sodass diese etwa den gleichen Wert der Zustandsgröße aufweist, wie die anderen Batteriezellen. Auch kann es sein, dass die Widerstände aller Batteriezellen dynamisch angepasst werden, um die Werte der Zustandsgröße für alle Batteriezellen einander anzugleichen.

Durch diese dynamische Anpassung der Widerstände der einzelnen Batteriezellen kann in vorteilhafter Weise eine Lebensdauer und eine Produktivität der Batteriezelle gesteigert werden.

Besonders bevorzugt wird als die Zustandsgröße ein elektrischer Strom, insbesondere zwischen der zumindest einen Elektrode und dem jeweiligen Anschluss, der jeweiligen Batteriezelle gemessen. Anders ausgedrückt bedeutet dies, dass die elektrischen Ströme der einzelnen Batteriezellen miteinander verglichen werden. Da, wie bereits ausgeführt, im Parallelverbund eine ungleiche Strombelastung der einzelnen Batteriezellen zu Einschränkungen bezüglich der Lebensdauer und der Performance führt, kann diese ungleiche Strombelastung durch die dynamische Anpassung des Innenwiderstandes jeder der Batteriezellen kompensiert werden.

Zur Messung des Stromes kann jede der Batteriezellen einen Stromsensor aufweisen, welcher den Strom, insbesondere zwischen der Elektrode und dem Anschluss, der jeweiligen Batteriezelle erfasst. Diese Stromwerte können beispielsweise an die übergeordnete Steuereinrichtung übertragen werden, welche die Stromwerte der einzelnen Batteriezellen miteinander vergleicht. Wenn die Abweichung zwischen den einzelnen Stromwerten außerhalb des vorgegebenen Toleranzbereiches liegt, kann die Steuereinrichtung den Widerstand zwischen der zumindest einen Elektrode und dem Anschluss zumindest einer der Batteriezellen und damit die Strombelastung der zumindest einen Batteriezelle so lange verändern, bis alle Stromwerte etwa gleich sind.

Da im Parallelverbund an allen Batteriezellen die gleiche elektrische Spannung anliegt, kann also durch die dynamische Innenwiderstandanpassung, also die dynamische Anpassung des Widerstandes zwischen den Elektroden und den jeweiligen Anschlüssen, die unterschiedliche Strombelastung kompensiert und damit eine symmetrische Strombelastung der einzelnen Batteriezellen gewährleistet werden.

Auch kann vorgesehen sein, dass als die Zustandsgröße eine Temperatur innerhalb des Batteriezellengehäuses der jeweiligen Batteriezelle gemessen wird. Dazu können die Batteriezellen beispielsweise jeweils eine Temperatursensor aufweisen, und diesen Wert der Temperatur beispielsweise der übergeordneten Steuereinrichtung kommunizieren. Wenn beispielsweise eine der Batteriezellen überhitzt ist, beispielsweise aufgrund von lokalen Temperaturerhöhungen oder sogenannten "Hot Spots" in der Batteriezelle, so weicht die Temperatur dieser Batteriezelle von den Temperaturen der anderen Batteriezellen ab. Sobald die Abweichung außerhalb des Toleranzbereiches liegt, wird der Innenwiderstand dieser Batteriezelle insbesondere erhöht, sodass eine Strombelastung dieser Batteriezelle, und damit die Temperatur dieser Batteriezelle sinkt.

Auch kann es sein, dass die Steuereinrichtung anhand der erhöhten Temperatur einen Defekt der Batteriezelle erkennt. In diesem Fall kann der Widerstand dieses Batteriezelle maximal erhöht werden, sodass ein Stromfluss unterbrochen wird.

Gemäß einer Weiterbildung der Erfindung wird als die Zustandsgröße ein Ladezustand der jeweiligen Batteriezelle erfasst. Dazu kann jede der Batteriezellen beispielsweise einen Spannungssensor aufweisen, welcher die Batteriezellspannung und damit den Ladezustand der jeweiligen Batteriezelle erfasst. Somit kann beim Laden der Batterie durch die Erfassung des Ladezustandes beziehungsweise des SoC (State of Charge) und die dynamische Anpassung des Innenwiderstandes der einzelnen Batteriezellen eine Stromzufuhr individuell an den Ladezustand der jeweiligen Batteriezelle angepasst werden. Somit kann verhindert werden, dass einzelne Batteriezellen überladen werden, indem beispielsweise die Innenwiderstände derjenigen Batteriezellen mit dem höheren Ladezustand erhöht werden. Damit wird die Performance der gesamten Batterie gesteigert. Beim Entladen der Batterie kann durch die Erfassung des Ladezustandes und die dynamische Anpassung der Widerstände ein Tiefenentladen einzelner Batteriezellen verhindert werden.

Vorzugsweise wird zum Einstellen des Widerstandes ein elektronisches Schaltelement, insbesondere ein Halbleiterschalter, betrieben. Dabei ist die zumindest eine Elektrode der Batteriezelle über das elektronische Schaltelement mit dem jeweiligen Anschluss verbunden. Insbesondere sind beide Elektroden je Batteriezelle mit dem jeweiligen Anschluss über jeweils ein elektronisches Schaltelement verbunden. Bei dem elektronischen Schaltelement kann ein Stromfluss mittels eines Steuersignals, beispielsweise einer Steuerspannung an dem elektronischen Schaltelement, gesteuert werden. Das elektronische Schaltelement kann beispielsweise von der übergeordneten Steuereinrichtung oder von einer batteriezelleigenen Steuereinrichtung angesteuert werden.

Das elektronische Schaltelement, welches beispielsweise als ein Leistungs-MOSFET (Metall-Oxid-Halbleiter-Feldeffekttransistor) oder als ein IGBT (insulated gate bipolar transistor) ausgestaltet sein kann, kann abhängig von der Steuerspannung in verschiedenen Bereichen betrieben werden. Wenn das elektronische Schaltelement in einem Sperrbereich betrieben wird, also wenn die Steuerspannung einen vorgegebenen Schwellwert unterschreitet, sperrt beziehungsweise blockiert das elektronische Schaltelement einen Stromfluss zwischen der Elektrode und dem jeweiligen Anschluss. Dies bedeutet, dass der elektronische Widerstand zwischen der Elektrode und dem Anschluss maximal ist. Wenn beide Elektrode über jeweils ein elektronisches Schaltelement einer Batteriezelle mit dem jeweiligen Anschluss verbunden sind, so kann die Batteriezelle durch Sperren des Stromes zwischen beiden Elektrode und den Anschlüssen vollständig von den anderen Batteriezellen des Parallelverbundes entkoppelt werden.

Wenn das elektronische Schaltelement in einem linearen Bereich beziehungsweise einem Triodenbereich betrieben wird, so kann durch Erhöhen der Steuerspannung der Stromfluss linear erhöht werden.

Wenn das elektronische Schaltelement in einem Sättigungsbereich betrieben wird, so kann zwischen dem Anschluss und der Elektrode ab einer bestimmten Steuerspannung ein konstanter, maximaler Strom fließen. Dies bedeutet, dass der elektrische Widerstand zwischen der Elektrode und dem Anschluss minimal ist.

Durch Betreiben des elektronischen Schaltelementes kann auf besonders einfache und zuverlässige Weise eine dynamische Widerstandsanpassung durchgeführt werden.

Eine Weiterbildung der Erfindung sieht vor, dass zum Einstellen des Widerstandes das elektronische Schaltelement in einem linearen Bereich betrieben wird, in welchem das elektronische Schaltelement das Verhalten eines ohmschen Widerstandes aufweist. In dem linearen Bereich kann ein Strom über das elektronische Schaltelement, und damit ein Strom zwischen der Elektrode und dem Anschluss, proportional zu der angelegten Steuerspannung verändert werden. Durch Bereitstellen der entsprechenden Steuerspannung kann also der Widerstand zwischen der Elektrode und dem Anschluss eingestellt werden. Dabei kann für jede Batteriezelle die Steuerspannung, insbesondere als analoges Signal, individuell vorgegeben werden und somit der Widerstand für jede Batteriezelle individuell vorgegeben werden. Dazu kann die entsprechende Ansteuerung des Schaltelementes einer Batteriezelle beispielsweise von der batteriezelleigenen Steuereinrichtung oder der übergeordneten Steuereinrichtung durchgeführt werden.

Gemäß einer weiteren Ausgestaltung der Erfindung wird zum Einstellen des Widerstandes das elektronische Schaltelement getaktet betrieben. Anders ausgedrückt bedeutet dies, dass das Schaltelement abwechselnd in dem Sperrbereich und dem Sättigungsbereich betrieben wird. Hierzu kann ein digitales Signal, besonders bevorzugt ein pulsweitenmoduliertes Signal, zum Steuern des elektronischen Schaltelementes vorgegeben werden. Der entsprechende Widerstand beziehungsweise der Strom wird dabei über die Pulsdauer des getakteten Signals eingestellt. Wenn der Widerstand mehrerer Batteriezellen dynamisch eingestellt wird, so kann für jede der Batteriezellen ein individuelles Signal vorgegeben werden. Digitale Signale sind besonders vorteilhaft, da sie besonders sicher und nahezu störungsfrei, beispielsweise von der übergeordneten Steuereinrichtung, übertragen werden können.

Die Erfindung umfasst außerdem eine Batterie für ein Kraftfahrzeug mit zumindest zwei elektrisch parallel geschalteten Batteriezellen, wobei jede der Batteriezellen ein galvanisches Element mit zwei Elektroden und ein Batteriezellengehäuse zum Aufnehmen des galvanischen Elementes mit zwei Anschlüssen aufweist und jede der Elektroden mit jeweils einem Anschluss der Batteriezellen elektrisch gekoppelt ist. Darüber hinaus weist jede der Batteriezellen zumindest eine Sensoreinrichtung zum Erfassen eines Wertes einer Zustandsgröße aufweist. Zusätzlich umfasst die Batterie eine Steuereinrichtung, welche dazu ausgelegt ist, die Werte der Zustandsgröße jeder der Batteriezellen miteinander zu vergleichen und bei einer Abweichung der Werte, welche außerhalb eines vorgeschriebenen Toleranzbereiches liegt, einen elektrischer Widerstand zwischen zumindest einer Elektrode und zumindest einem der Anschlüsse zumindest einer der Batteriezellen, und folglich eine Strombelastung zumindest einer der Batteriezellen, einzustellen, sodass die Abweichung innerhalb des vorgeschriebenen Toleranzbereiches liegt.

Ein erfindungsgemäßes Kraftfahrzeug umfasst zumindest eine erfindungsgemäße Batterie. Das Kraftfahrzeug kann beispielsweise als Personenkraftwagen, insbesondere als ein Elektro- oder Hybridkraftwagen ausgestaltet sein. Das Kraftfahrzeug kann aber auch als ein elektrisch betriebenes Motorrad oder Fahrrad ausgeführt sein.

Es ist aber auch möglich, die Batterie in einem stationären Energiespeichersystem vorzusehen. Dabei kann es beispielsweise vorgesehen sein, dass die Batterie, welche in einem Kraftfahrzeug bereitgestellt war, als sogenannte Second Life Batterie in dem stationären Energiespeichersystem weiterverwendet wird.

Die mit Bezug auf die erfindungsgemäße Batteriezelle vorgestellten bevorzugten Ausführungsformen und deren Vorteile gelten entsprechend für die erfindungsgemäße Batterie sowie das erfindungsgemäße Kraftfahrzeug.

Im Folgenden wird die Erfindung nun anhand eines bevorzugten Ausführungsbeispiels, wie auch unter Bezugnahme auf die beigefügten Zeichnungen näher erläutert.

Es zeigen:
- Fig. 1: ein Ersatzschaltbild von Batteriezellen, welche über eine Stromschiene miteinander verbunden sind, gemäß dem Stand der Technik;
- Fig.2: eine schematische Darstellung eines Ausschnitts einer Batterie; und
- Fig. 3: eine schematische Darstellung einer Batteriezelle, bei welcher ein Widerstand mittels elektronischer Schaltelemente verändert werden kann.

In den Figuren sind gleiche oder funktionsgleiche Elemente mit dem gleichen Bezugszeichen versehen.

Bei dem im Folgenden erläuterten Ausführungsbeispiel handelt es sich um bevorzugte Ausführungsformen der Erfindung. Bei den Ausführungsbeispielen stellen aber die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

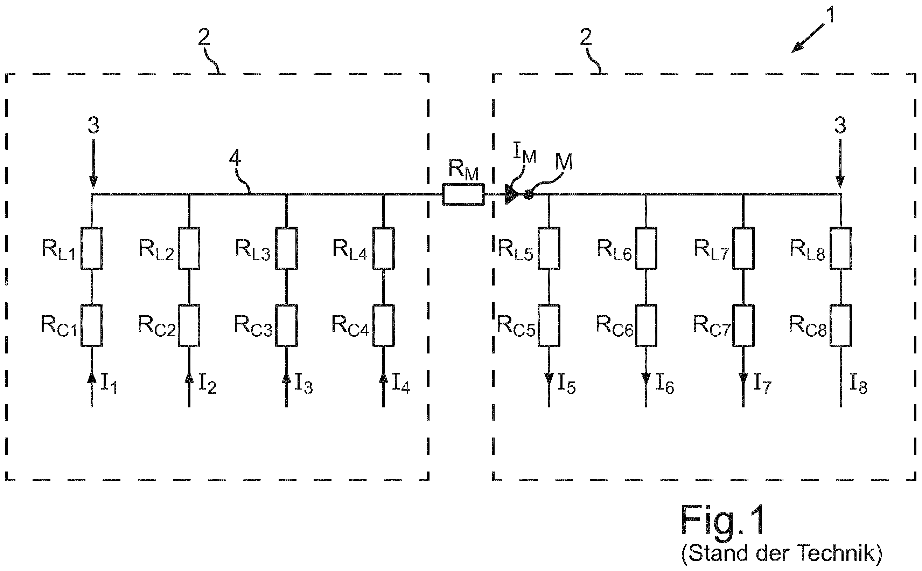

Fig. 1 zeigt ein Ersatzschaltbild eines Ausschnitts einer Batterie 1 mit acht Batteriezellen 3 gemäß dem Stand der Technik. Die Batterie 1 umfasst eine Reihenschaltung aus Batteriemodulen 2, von denen hier die Ersatzschaltbilder zweier Batteriemodule 2 schematisch gezeigt sind. Jedes der Batteriemodule 2 weist eine Parallelschaltung aus mehreren Batteriezellen 3 auf, von denen hier pro Batteriemodul 2 die Ersatzschaltbilder von vier Batteriezellen 3 schematisch gezeigt sind. Die Batteriezellen 3 sind über einen elektrischen Leiter 4, beispielsweise eine Stromschiene oder ein Stromkabel, innerhalb der Batteriemodule 2 parallel verschaltet. Außerdem sind die Batteriemodule 2 über den Leiter 4 seriell zu der Batterie 1 verschaltet.

Beim einem solchen Parallelverbund mehrerer Batteriezellen 3 ergeben sich unterschiedlichen Weglängen und folglich unterschiedliche Gesamtwiderstandspfande. Dabei symbolisieren die Widerstände R_{L1}, R_{L2}, R_{L3}, R_{L4}, R_{L5}, R_{L6}, R_{L7}, R_{L8} die jeweils zu überbrückenden unterschiedlichen Weglängen bis hin zu einem Knotenpunkt beziehungsweise einer Gesamtstromsammelstelle M. Die Widerstände R_{C1}, R_{C2}, R_{C3}, R_{C4}, R_{C5}, R_{C6}, R_{C7}, R_{C8} symbolisieren die Übergangswiderstände zwischen den jeweiligen Anschlüssen der Batteriezellen 2 und den Stromschienen beziehungsweise Stromkabeln. R_{M} symbolisiert den Stromübergangswiderstandspfad vom ersten, linksseitig dargestellten Batteriemodul 2 auf das nächste, rechtsseitig dargestellte Batteriemodul 2. Über den Knotenpunkt M fließt ein Gesamtstrom I_{M} von dem ersten Batteriemodul 2 in das zweite Batteriemodul 2.

Durch die unterschiedlichen Widerstände R_{L1}, R_{L2}, R_{L3}, R_{L4}, R_{L5}, R_{L6}, R_{L7}, R_{L8}, R_{C1}, R_{C2}, R_{C3}, R_{C4}, R_{C5}, R_{C6}, R_{C7}, R_{C8} werden die Batteriezellen 3 unterschiedlich belastet, das heißt die Ströme I₁, I₂, I₃, I₄, I₅, I₆, I₇, I₈ der Batteriezellen 3 können voneinander abweichen. Diese ungleiche Belastung der Batteriezellen 3 der Batterie 1 gemäß dem Stand der Technik kann zu Einschränkungen in der Lebensdauer der Batterie 1 und damit zu einem verfrühten Ausfall der Batterie 1 führen.

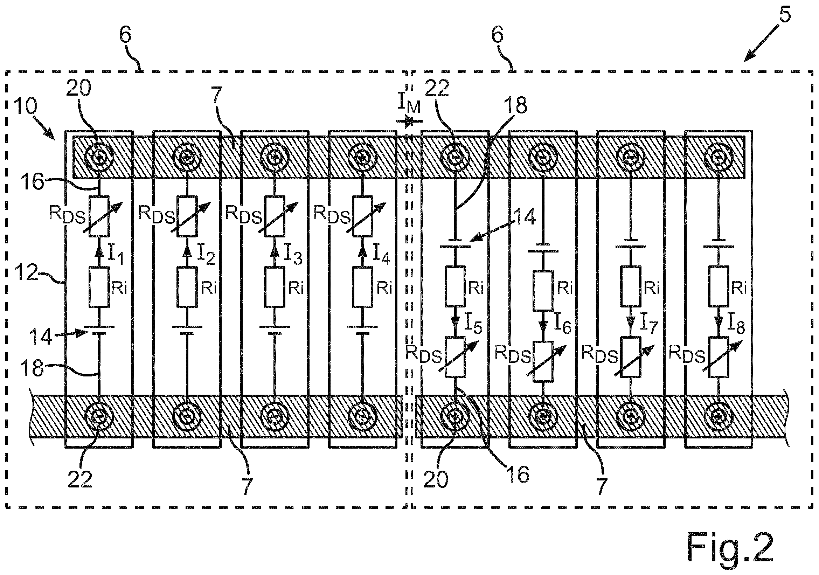

Fig. 2 zeigt einen Ausschnitt einer Batterie 5, mittels welcher die Nachteile der Batterie 1 gemäß dem Stand der Technik vermieden werden können. Die Batterie 5 umfasst eine Reihenschaltung aus Batteriemodulen 6, von denen hier zwei Batteriemodule 6 schematisch gezeigt sind. Jedes der Batteriemodule 6 weist eine Parallelschaltung aus mehreren Batteriezellen 10 auf, von denen hier pro Batteriemodul 6 vier Batteriezellen 10 schematisch gezeigt sind. Eine solche Batterie 5 kann beispielsweise in einem hier nicht gezeigten Kraftfahrzeug zum Antreiben des Kraftfahrzeugs angeordnet werden. Eine solche Batterie 5 kann aber auch in einem hier nicht gezeigten stationären Energieversorgungssystem vorgesehen sein.

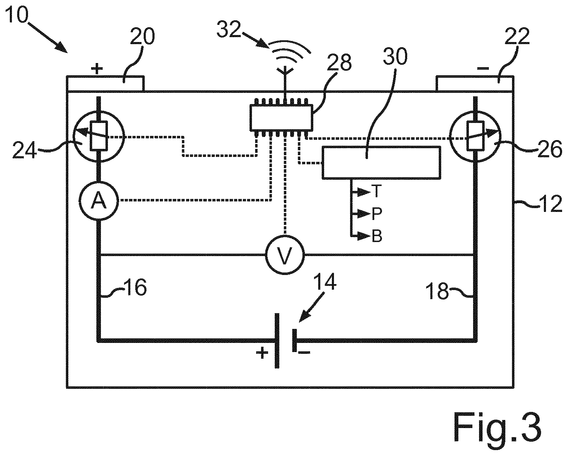

Jede der Batteriezellen 10, wie sie beispielhaft in Fig. 3 dargestellt ist, umfasst ein Batteriezellengehäuse 12. Innerhalb des Batteriezellengehäuses 12 ist ein galvanisches Element 14 angeordnet, dessen Elektroden über Ableiter 16, 18 mit Anschlüssen 20, 22 der Batteriezelle 10 elektrisch gekoppelt sind. Dabei ist eine positive Elektrode über den Ableiter 16 mit einem ersten Anschluss 20 beziehungsweise einem Pluspol der Batteriezelle 10 elektrisch verbunden und eine negative Elektrode über den Ableiter 18 mit einem zweiten Anschluss 22 beziehungsweise einem Minuspol der Batteriezelle 10 elektrisch verbunden.

Zur Parallelschaltung sind die ersten Anschlüsse 20 der Batteriezellen 10 innerhalb des Batteriemoduls 6 elektrisch verbunden und die zweiten Anschlüsse 22 der Batteriezellen 10 elektrisch verbunden. Die Batteriemodule 6 sind seriell elektrisch verbunden, indem die ersten Anschlüsse 20 des linksseitig dargestellten Batteriemoduls 6 mit den zweiten Anschlüssen 22 des rechtsseitig dargestellten Batteriemoduls 6 elektrisch verbunden sind. Die elektrische Verbindung zwischen den Batteriemodulen 6 und den Batteriezellen 10 kann mittels Stromschienen 7 hergestellt werden.

Jede der Batteriezellen 10 weist einen Innenwiderstand Rᵢ auf, welcher fertigungsbedingt und/oder alterungsbedingt zwischen den Batteriezellen 10 schwanken kann. Das heißt, dass jede der Batteriezellen 10 einen anderen Innenwiderstand Rᵢ aufweisen kann. Dadurch und aufgrund der im Zusammenhang mit der Batterie 1 gemäß dem Stand der Technik beschriebenen unterschiedlichen Widerstandspfade können sich die Ströme I₁, I₂, I₃, I₄, I₅, I₆, I₇, I₈ der Batteriezellen 10 voneinander unterscheiden. Die Batteriezellen 10 werden also asymmetrisch belastet. Um eine gleichmäßige Strombelastung zu gewährleisten, kann ein elektrischer Widerstand R_{DS} zwischen den Elektroden des galvanischen Elementes 14 zumindest einer Batteriezelle 10 und den Anschlüssen 20, 22 derselben Batteriezelle 10 und damit ein gesamter Innenwiderstand Rᵢ + R_{DS} dieser Batteriezelle 10 dynamisch angepasst werden.

Zum Erfassen des Stromes I₁, I₂, I₃, I₄, I₅, I₆, I₇, I₈ der jeweiligen Batteriezelle 10 kann jede der Batteriezellen 10 einen Stromsensor A (siehe Fig. 3) aufweisen. Dieser erfasste Strom I₁, I₂, I₃, I₄, I₅, I₆, I₇, I₈ kann an eine hier nicht gezeigte übergeordnete Steuereinrichtung übertragen werden. Dazu kann jede der Batteriezellen 10 eine Kommunikationseinrichtung 32 aufweisen, welche beispielsweise in Form einer Funkantenne ausgestaltet ist und beispielsweise über WLAN oder Bluetooth die Daten des Stromsensors A an die übergeordnete Steuereinrichtung versenden kann.

Die Werte der Ströme I₁, I₂, I₃, I₄, I₅, I₆, I₇, I₈ werden, beispielsweise von der Steuereinrichtung, miteinander verglichen. Wenn eine Abweichung der Werte der Ströme I₁, I₂, I₃, I₄, I₅, I₆, I₇, I₈, aufgrund der asymmetrischen Belastung, außerhalb eines vorgegebenen Toleranzbereiches liegt, so wird der elektrische Widerstand R_{DS} zwischen einer der Elektroden des galvanischen Elementes 14 und dem jeweiligen Anschluss 20, 22 zumindest einer der Batteriezellen 10 dynamisch verändert. Der elektrische Widerstand R_{DS} wird dabei so eingestellt, dass die Abweichung der Stromwerte I₁, I₂, I₃, I₄, I₅, I₆, I₇, I₈ innerhalb des vorgegebenen Toleranzbereiches liegt.

So kann insbesondere ein Widerstand R_{DS} derjenigen Batteriezellen 10 erhöht werden, welche, beispielsweise aufgrund eines kleineren Gesamtwiderstandspfades, höher belastet sind. Dadurch kann eine Strombelastung für diese Batteriezellen 10 verringert werden. Der Widerstand R_{DS} der, beispielsweise aufgrund eines größeren Gesamtwiderstandspfades, niedriger belasteten Batteriezellen 10 kann verringert werden, sodass die Strombelastung dieser Batteriezellen 10 erhöht wird.

Zum Einstellen des elektrischen Widerstandes R_{DS} zwischen den Anschlüssen 20, 22 und den Elektroden des galvanischen Elementes 14 kann jede der Batteriezellen 10, wie in Fig. 3 gezeigt, zumindest ein elektronisches Schaltelement 24, 26 aufweisen. In Fig. 3 ist dargestellt, dass die positive Elektrode mittels eines ersten elektronischen Schaltelementes 24 mit dem ersten Anschluss 20 beziehungsweise dem Pluspol der Batteriezelle 10 elektrisch gekoppelt ist und die negative Elektrode mittels eines zweiten elektronischen Schaltelementes 26 mit dem zweiten Anschluss 22 beziehungsweise dem Minuspol der Batteriezelle 10 elektrisch verbunden ist. Die Schaltelemente 24, 26 sind insbesondere als Halbleiterschaltelemente, beispielsweise als Leistungstransistoren mit veränderbarem Durchlasswiderstand ausgeführt.

Mittels der Schaltelemente 24, 26 kann, beispielsweise durch Bereitstellen einer entsprechenden Steuerspannung, ein Stromfluss zwischen den Elektroden und den Anschlüssen 20, 22 vorgegeben werden. Die Schaltelemente 24, 26 können beispielsweise in einem Sperrbereich betrieben werden, in welchem bei maximalem Durchlasswiderstand (R = ∞) die elektrisch leitende Verbindung zwischen den Ableitern 16, 18 und den elektrischen Anschlüssen 20, 22, und damit zwischen dem galvanischen Element 14 und den Anschlüssen 20, 22 unterbrochen ist.

Die Schaltelemente 24, 26 können in einem linearen Bereich betrieben werden, in welchem der Strom durch Erhöhen beziehungsweise Verringern der Steuerspannung linear erhöht beziehungsweise verringert werden kann. In dem linearen Bereich verhalten sich die Schaltelemente 24, 26 also wie ohmsche Widerstände.

Wenn die elektronischen Schaltelemente 24, 26 in einem Sättigungsbereich betrieben werden, so kann zwischen den Anschlüssen 20, 22 und dem galvanischen Element 14 ab einer bestimmten Steuerspannung bei minimalem Durchlasswiderstand (R = 0) ein konstanter, maximaler Strom fließen.

Die Schaltelemente 24, 26 können beispielsweise von einer batteriezellinternen Steuereinrichtung 28 angesteuert werden und in dem entsprechenden Bereich betrieben werden. So kann beispielsweise bei einer Abweichung der erfassten Stromwerte über den Toleranzbereich hinaus von der übergeordneten Steuereinrichtung die batteriezellinterne Steuereinrichtung 28 derjenigen Batteriezelle 10 oder Batteriezellen 10, beispielsweise über die Kommunikationseinrichtung 32, angesprochen werden, deren Widerstand R_{DS} dynamisch verändert werden soll. Daraufhin wird durch die batteriezellinterne Steuereinrichtung 28 zumindest eines der Schaltelemente 24, 26 angesteuert, welches den Strom zwischen der Elektrode und dem jeweiligen Anschluss 20, 22 anpasst. Die Schaltelemente 24, 26 können beispielsweise durch Vorgeben eines analogen Steuersignals in dem linearen Bereich betrieben werden oder durch Vorgeben eines digitalen Signals getaktet betrieben werden.

Darüber hinaus weist die Batteriezelle 10, wie in Fig. 3 gezeigt, eine Sensoreinrichtung 30 auf, mittels welcher hier eine Temperatur T, ein Druck P und eine Beschleunigung B der Batteriezelle 10 erfasst werden können. Wenn beispielsweise die Temperaturen T der einzelnen Batteriezellen 10 voneinander abweichen, also bei einer asymmetrischen Temperaturbelastung, können die Temperaturen T der einzelnen Batteriezellen 10 durch Variation der Strombelastung, also durch Variation des elektrischen Widerstands R_{DS}, angepasst werden. In diesem Fall weisen die Batteriezellen 10 zwar unterschiedliche Strombelastungen auf, jedoch werden über diese unterschiedlichen Strombelastungen die Temperaturen der einzelnen Batteriezellen 10 vorgegeben und aneinander angeglichen.

Auch kann es sein, dass beispielsweise die Temperatur T einer Batteriezelle 10 aufgrund eines Defektes der Batteriezelle 10 einen vorgegebenen Schwellwert für die Temperatur überschreitet. Dann können die Schaltelemente 24, 26, beispielsweise von der batteriezellinternen Steuereinrichtung 28, beide in dem Sperrbereich betrieben werden. Dadurch wird diese Batteriezelle 10 von der Batterie 5 entkoppelt.

Außerdem weist die Batteriezelle 10 hier einen Spannungssensor V zum Erfassen einer Batteriezellenspannung und damit eines Ladezustandes, der Batteriezelle 10 auf. Somit kann der Widerstand R_{DS} auch an die Ladezustände der einzelnen Batteriezellen 10 angepasst werden. Damit kann gewährleistet werden, dass alle Batteriezellen 10 gleichmäßig geladen und/oder entladen werden, und insbesondere nicht überladen und/oder tiefenentladen werden.

## Patentansprüche

1. Verfahren zum Betreiben von zumindest zwei elektrisch parallel geschalteten Batteriezellen (10) einer Batterie (5) für ein Kraftfahrzeug, wobei jede der Batteriezellen (10) ein galvanisches Element (14) mit zwei Elektroden und ein Batteriezellengehäuse (12) zum Aufnehmen des galvanischen Elementes (14) mit zwei Anschlüssen (20, 22) aufweist und jede der Elektroden mit jeweils einem Anschluss (20, 22) der Batteriezelle (10) elektrisch gekoppelt wird,
**dadurch gekennzeichnet, dass**
von den Batteriezellen (10) jeweils ein Wert einer Zustandsgröße gemessen wird, die Werte der Zustandsgröße der Batteriezellen (10) miteinander verglichen werden, und bei einer Abweichung der Werte voneinander, welche außerhalb eines vorgegebenen Toleranzbereiches liegt, ein elektrischer Widerstand (R_{DS}) zwischen zumindest einer Elektrode und einem der Anschlüsse (20, 22) zumindest einer der Batteriezellen (10) eingestellt wird, sodass die Abweichung innerhalb des vorgegebenen Toleranzbereiches liegt.

2. Verfahren nach Anspruch 1,
**dadurch gekennzeichnet, dass**
als die Zustandsgröße ein elektrischer Strom (I₁, I₂, I₃, I₄, I₅, I₆, I₇, I₈,), insbesondere zwischen zumindest einer Elektrode und dem jeweiligen Anschluss (20, 22), der jeweiligen Batteriezelle (10) gemessen wird.

3. Verfahren nach Anspruch 1 oder 2,
**dadurch gekennzeichnet, dass**
als die Zustandsgröße eine Temperatur (T) innerhalb des Batteriezellengehäuses (12) der jeweiligen Batteriezelle (10) gemessen wird.

4. Verfahren nach einem der Ansprüche 1 bis 3,
**dadurch gekennzeichnet, dass**
als die Zustandsgröße ein Ladezustand der jeweiligen Batteriezelle (10) erfasst wird.

5. Verfahren nach einem der Ansprüche 1 bis 4,
**dadurch gekennzeichnet, dass**
zum Einstellen des Widerstandes (R_{DS}) ein elektronisches Schaltelement (24, 26), insbesondere ein Halbleiterschalter, betrieben wird.

6. Verfahren nach Anspruch 5,
**dadurch gekennzeichnet, dass**
zum Einstellen des Widerstandes (R_{DS}) das elektronische Schaltelement (24, 26) in einem linearen Bereich betrieben wird, in welchem das elektronische Schaltelement (24, 26) das Verhalten eines ohmschen Widerstandes aufweist.

7. Verfahren nach einem der Ansprüche 5 oder 6,
**dadurch gekennzeichnet, dass**
zum Einstellen des Widerstandes (R_{DS}) das elektronische Schaltelement (24, 26) getaktet betrieben wird.

8. Verfahren nach Anspruch 7,
**dadurch gekennzeichnet, dass**
zum Einstellen des Widerstandes (R_{DS}) ein pulsweitenmoduliertes Signal für das elektronische Schaltelement (24, 26) der jeweiligen Batteriezelle (10) vorgegeben wird.

9. Batterie (5) für ein Kraftfahrzeug mit zumindest zwei elektrisch parallel geschalteten Batteriezellen (10), wobei jede der Batteriezellen (10) ein galvanisches Element (14) mit zwei Elektroden und ein Batteriezellengehäuse (12) zum Aufnehmen des galvanischen Elementes (14) mit zwei Anschlüssen aufweist und jede der Elektroden mit jeweils einem Anschluss (20, 22) der Batteriezelle (10) elektrisch gekoppelt ist,
**dadurch gekennzeichnet, dass**
jede der Batteriezellen (10) zumindest eine Sensoreinrichtung (A, V, 30) zum Erfassen eines Wertes einer Zustandsgröße aufweist, und die Batterie (5) eine Steuereinrichtung aufweist, welche dazu ausgelegt ist, die Werte der Zustandsgröße jeder der Batteriezellen (10) miteinander zu vergleichen und bei einer Abweichung der Werte, welche außerhalb eines vorgeschriebenen Toleranzbereiches liegt, einen elektrischer Widerstand (R_{DS}) zwischen zumindest einer Elektrode und zumindest einem der Anschlüsse (20, 22) zumindest einer der Batteriezellen (10) einzustellen, sodass die Abweichung innerhalb des vorgeschriebenen Toleranzbereiches liegt.

10. Kraftfahrzeug mit einer Batterie (5) nach Anspruch 9.

## Claims

1. Method for operating at least two electrically parallel-connected battery cells (10) of a battery (5) for a motor vehicle, wherein each of the battery cells (10) having a galvanic element (14) with two electrodes and a battery cell housing (12) for accommodating the galvanic element (14) with two terminals (20, 22) and each of the electrodes is electrically coupled to one terminal (20, 22) of the battery cell (10),
**characterised in that**
from each of the battery cells (10) a value of a state variable is measured, **in that** the values of the state quantity of the battery cells (10) are compared with each other, and in the case of a deviation of the values from each other which is outside a predetermined tolerance range, an electrical resistance (R_{DS}) between at least one electrode and one of the terminals (20, 22) of at least one of the battery cells (10) is adjusted so that the deviation is within the predetermined tolerance range.

2. Method according to claim 1,
**characterised in that**
as the state variable, an electric current (I₁, I₂, I₃, I₄, I₅, I₆, I₇, I₈,), in particular between at least one electrode and the respective terminal (20, 22) of the respective battery cell (10) is measured.

3. Method according to claim 1 or 2,
**characterised in that**
as the state variable, a temperature (T) within the battery cell housing (12) of the respective battery cell (10) is measured.

4. Method according to one of claims 1 to 3,
**characterised in that**
a state of charge of the respective battery cell (10) is detected as the state variable.

5. Method according to one of claims 1 to 4,
**characterised in that**
for adjusting the resistor (R_{DS}) an electronic switching element (24, 26), in particular a semiconductor switch is operated.

6. Method according to claim 5,
**characterised in that**
for adjusting the resistance (R_{DS}), the electronic switching element (24, 26) is operated in a linear range in which the electronic switching element (24, 26) has the behaviour of an ohmic resistance.

7. Method according to one of claims 5 or 6,
**characterised in that**
for adjusting the resistance (R_{DS}), the electronic switching element (24, 26) is operated clocked.

8. Method according to claim 7,
**characterised in that**
for setting the resistance (R_{DS}) a pulse-width-modulated signal for the electronic switching element (24, 26) of the respective battery cell (10) is specified.

9. Battery (5) for a motor vehicle having at least two battery cells (10) electrically connected in parallel, wherein each of the battery cells (10) having a galvanic element (14) with two electrodes and a battery cell housing (12) for receiving the galvanic element (14) with two terminals and each of the electrodes, each with a terminal (20, 22) of the battery cell (10) is electrically coupled,
**characterised in that**
each of the battery cells (10) at least one sensor device (A, V, 30) for detecting a value of a state variable and the battery (5) has a control device that is designed to compare the values of the state variable of each of the battery cells (10) with one another and, in the case of a deviation of the values which lies outside a prescribed tolerance range, an electrical resistance (R_{DS}) between at least one electrode and at least one of the terminals (20, 22) of at least one of the battery cells (10) is adjusted, so that the deviation lies within the prescribed tolerance range.

10. Motor vehicle with a battery (5) according to claim 9.

## Revendications

1. Procédé de fonctionnement d'au moins deux cellules de batterie (10), branchées électriquement en parallèle, d'une batterie (5) pour un véhicule automobile, procédé dans lequel chacune des cellules de batterie (10) comporte un élément galvanique (14) avec deux électrodes et un boîtier de cellule de batterie (12) destiné à loger l'élément galvanique (14) avec deux bornes (20, 22) et chacune des électrodes est couplée électriquement à chaque fois à une borne (20, 22) de la cellule de batterie (10),
**caractérisé en ce que**, concernant les cellules de batterie (10), on mesure à chaque fois une valeur d'une grandeur d'état, on compare les valeurs de la grandeur d'état des cellules de batterie (10) entre elles et, en présence d'un écart entre les valeurs qui se situe en dehors d'une plage de tolérance prescrite, on règle une résistance électrique (R_{DS}) entre au moins une électrode et l'une des bornes (20, 22) au moins de l'une des cellules de batterie (10) de telle sorte que l'écart se situe dans les limites de la plage de tolérance prescrite.

2. Procédé selon la revendication 1,
**caractérisé en ce que**,
comme grandeur d'état, on mesure un courant électrique (I₁, I₂, I₃, I₄, I₅, I₆, I₇, I₈), en particulier entre au moins une électrode et la borne (20, 22) respective, de la cellule de batterie (10) respective.

3. Procédé selon la revendication 1 ou 2,
**caractérisé en ce que**,
comme grandeur d'état, on mesure une température (T) à l'intérieur du boîtier de cellule de batterie (12) de la cellule de batterie (10) respective.

4. Procédé selon l'une quelconque des revendications 1 à 3,
**caractérisé en ce que**,
comme grandeur d'état, on détecte un état de charge de la cellule de batterie (10) respective.

5. Procédé selon l'une quelconque des revendications 1 à 4,
**caractérisé en ce que**,
pour régler la résistance (R_{DS}), on exploite un commutateur électronique (24, 26), en particulier un interrupteur à semi-conducteur.

6. Procédé selon la revendication 5,
**caractérisé en ce que**,
pour régler la résistance (R_{DS}), on exploite le commutateur électronique (24, 26) dans une plage linéaire dans laquelle le commutateur électronique (24, 26) présente le comportement d'une résistance ohmique.

7. Procédé selon l'une quelconque des revendications 5 ou 6,
**caractérisé en ce que**,
pour régler la résistance (R_{DS}), on exploite le commutateur électronique (24, 26) de manière cadencée.

8. Procédé selon la revendication 7,
**caractérisé en ce que**,
pour régler la résistance (R_{DS}), on prescrit un signal à largeur d'impulsion modulée pour le commutateur électronique (24, 26) de la cellule de batterie (10) respective.

9. Batterie (5) pour un véhicule automobile avec au moins deux cellules de batterie (10) branchées électriquement en parallèle, batterie dans laquelle chacune des cellules de batterie (10) comporte un élément galvanique (14) avec deux électrodes et un boîtier de cellule de batterie (12) destiné à loger l'élément galvanique (14) avec deux bornes et chacune des électrodes est couplée électriquement à chaque fois à une borne (20, 22) de la cellule de batterie (10),
**caractérisée en ce que**
chacune des cellules de batterie (10) comporte au moins un dispositif capteur (A, V, 30) destiné à détecter une valeur d'une grandeur d'état et la batterie (5) comporte un dispositif de commande qui est conçu pour comparer les valeurs de la grandeur d'état de chacune des cellules de batterie (10) entre elles et pour, en présence d'un écart entre les valeurs qui se situe en dehors d'une plage de tolérance prescrite, régler une résistance électrique (R_{DS}) entre au moins une électrode et au moins une des bornes (20, 22) au moins de l'une des cellules de batterie (10) de telle sorte que l'écart se situe dans les limites de la plage de tolérance prescrite.

10. Véhicule automobile avec une batterie (5) selon la revendication 9.
